# EUROPÄISCHE PATENTSCHRIFT

(11) **EP 1 244 604 B1**
(45) Veröffentlichungstag und Bekanntmachung des Hinweises auf die Patenterteilung: **02.07.2003**
(21) Anmeldenummer: 00984600.7
(22) Anmeldetag: 30.11.2000
(51) Int. Cl.: C02F 3/12

(54) **VERFAHREN ZUR BIOLOGISCHEN ABWASSERREINIGUNG**
METHOD FOR BIOLOGICAL EFFLUENT TREATMENT
PROCEDE POUR L'EPURATION BIOLOGIQUE D'EAUX USEES

(30) Priorität: 21.12.1999 EP 99890398
(43) Veröffentlichungstag der Anmeldung: 02.10.2002
(73) Patentinhaber: Ingerle, Kurt, 6091 Götzens (AT)
(72) Erfinder: Ingerle, Kurt, 6091 Götzens (AT)
(74) Vertreter: Matschnig, Franz, Dipl.-Ing.
(86) Internationale Anmeldenummer: AT0000322
(87) Internationale Veröffentlichungsnummer: WO01046075

(56) Entgegenhaltungen:
- EP-A- 0 339 013
- WO-A-97/08104
- WO-A-98/37026

## Beschreibung

Die vorliegende Erfindung betrifft ein Verfahren zur biologischen Reinigung von kommunalem oder ähnlichem Abwasser mit Hilfe von Belebtschlamm, bei dem das Abwasser zunächst in ein belüftbares Belebungsbecken (B-Becken) und anschließend abwechselnd in eines von mehreren mit dem Becken hydraulisch ständig verbundenen Sedimentations- und Umwälzbecken (SU-Becken) eingeleitet wird, in denen mehrmals am Tag Betriebszyklen ablaufen, die eine Rührphase (R-Phase), eine Vorabsetzphase (V-Phase) und eine Abzugsphase (A-Phase) aufweisen, wobei der Reihe nach in der R-Phase der Belebtschlamm wieder mit dem Wasser vermischt wird, in der V-Phase der Belebtschlamm sedimentiert und in der A-Phase Klarwasser abgezogen wird und wobei die Zyklen in den SU-Becken phasenverschoben sind, die A-Phasen aneinander grenzen, nur in den A-Phasen die SU-Becken durchströmt werden, ein annähernd konstanter Wasserspiegel vorhanden ist und somit ein dem Kläranlagenzulauf entsprechender Kläranlagenablauf entsteht (Durchflussprinzip).

Aus der europäischen Patentanmeldung 98111970.4 ist ein Verfahren zur biologischen Reinigung von Abwasser mit Hilfe von Belebtschlamm bekannt, bei dem das Abwasser zunächst in ein belüftbares Belebungsbecken und anschließend in ein Sedimentationsbecken eingeleitet wird, in dem eine Trennung von Belebtschlamm und Klarwasser erfolgt und nach Trennung Belebtschlamm in das Belebungsbecken zurückgeführt und Klarwasser abgezogen wird. Mehrmals am Tag läuft ein Betriebszyklus im Sedimentationsbecken ab, der eine Rührphase, eine Vorabsetzphase und eine Abzugsphase aufweist, wobei in der Rührphase der Belebtschlamm wieder mit dem Wasser vermischt wird, in der Vorabsetzphase der Belebtschlamm sedimentiert wird und in der Abzugsphase Klarwasser gezogen wird. Gemäß dem o. a. Verfahren des Standes der Technik erfolgt die Reinigung in einem biologischen Zweibeckensystem - dem Belebungs- und dem Sedimentationsbecken mit ständigem Zufluss und intermittierenden Abfluss. In der abflusslosen Zeit steigt der Wasserspiegel durch den Zufluss an (Aufstauprinzip). Der Patentanspruch dieses Verfahrens besteht darin, dass nach der Vorabsetzphase und vor der Rührphase sedimentierter Belebtschlamm in das Belebungsbecken des "Zweibeckensystems mit Aufstaubetrieb" rückgeführt wird. Dass es sich bei diesem Verfahren um einen Aufstaubetrieb handelt, geht auch aus der Beschreibung der Druckschrift (S. 14 und 15) hervor, wo angeführt ist: "dass dem ersten Bereich ständig Wasser zugeführt wird und auch von dort in den zweiten Bereich überläuft. Ein Ablauf von geklärtem Abwasser erfolgt hier nur während des dritten Verfahrensschrittes. Während der anderen Verfahrensschritte staut sich das Abwasser in den beiden Bereichen oder - bei Vorhandensein einer anaeroben Vorbehandlung - auch in diesem Bereich auf". Auch im Patentanspruch 13 ist klar ersichtlich, dass es sich um "Zweibeckensysteme mit Aufstaubetrieb" handelt, die "parallel geschaltet sind und zeitversetzt betrieben werden". Dieses Verfahren des Standes der Technik eignet sich sehr gut für kleine Kläranlagen. Für mittlere und große Kläranlagen ist aber weit besser, das Durchflussprinzip anzuwenden. Der Kläranlagenablauf entspricht dann dem Kläranlagenzufluss.

Aus der WO 97/08104 ist ein ähnliches Verfahren bekannt, bei dem zu Beginn eines jeden Zyklus im Belebungs- und Sedimentationsbecken die gleiche Schlammkonzentration eingestellt wird, indem die Rückführung des nicht sedimentierten Belebtschlammes während der Rührphase erfolgt. Eine Rückführung von sedimentierten und gut eingedicktem Belebtschlamm vor der Rührphase ist nicht vorgesehen.

Aus dem europäischen Patent 0 670 817 B1 vom 29. 12. 1999 ist ebenfalls ein ähnliches Verfahren bekannt, bei dem das Abwasser in zwei Zellen behandelt wird, bei dem das Abwasser in der Behandlungs-Abgabezelle belüftet und gemischt wird und bei dem die Schlammrückrührung von der Behandlungs-Abgabezelle in die erste Behandlungszelle während der Mischperiode (B- und R-Phase) erfolgt. Wesentlich ist hier, dass in der Behandlungs-Abgabezelle belüftet und gemischt wird und dass kein sedimentierter und eingedickter Belebtschlamm zur Rückführung kommt, wodurch längere Zeit für die Rückführung benötigt wird, nur ein geringer Trockensubstanzgehalt in der ersten Behandlungszelle erzielt wird und somit ein Zeitverlust für die anderen Phasen entsteht (siehe Anspruch 1 aus der Druckschrift).

Aus dem europäischen Patent 1 110 916 vom 17. 01. 2000 ist ein ähnliches Verfahren bekannt. In einer Kläranlage, die nach dem Durchflussprinzip arbeitet und die Einbeckentechnologie anwendet, wird sedimentierter und eingedickter Belebtschlamm nach den V-Phasen und noch vor den R-Phasen in das erste Behandlungsbecken rückgeführt. Die Schlammrückführung erfolgt in einer relativ kurzen Zeit, was eine große Rückführmenge erfordert.

Die EP 0 339 013 betrifft eine Vorrichtung zur Abwasseraufbereitung, in der eine Pufferung von größeren Abwassermengen (Abwasserstöße) auf einfache Art möglich ist; dies wird dadurch erreicht, dass das Verschlussorgan des Ablaufs des Belebungsbeckens einen beweglichen Verschlusskörper aus einer elastisch verformbaren Folie aufweist. Die Flüssigkeit aus dem Belebungsbecken wird mit einem Druckluftheber in das Nachklärbecken befördert Am Boden beider Becken ist eine verschließbare Öffnung vorgesehen, die dem intermittierenden Transport von abgesetzten Schlamm vom Nachklärbecken in das Belebungsbecken dient und nur kurzzeitig geöffnet wird. Die Verbindung beider Becken ist somit die meiste Zeit hydraulisch unterbunden und führt zu unterschiedlichen Wasserspiegel-Lagen in beiden Becken. Bei dem dieser Anordnung zugrunde liegenden Verfahren handelt es sich um ein nach dem Autstauprinzip betriebenes Belebungsverfahren mit intermittierender, kurzzeitiger Schlammrückführung vom Nachklärbecken ins Belebungsbecken und mit intermittierendem Abzug aus dem Nachklärbecken, im Gegensatz zu dem Durchflussverfahren wie eingangs genannt.

Der vorliegenden Erfindung liegt die Aufgabe zugrunde, die eingangs beschriebenen Verfahren zur biologischen Abwasserreinigung derart zu verbessern, dass eine Anwendung für mittlere und große Kläranlagen durch die Verwendung des Durchflussprinzips ermöglicht wird und gleichzeitig eine höhere Schlammkonzentration im Belebungsbecken bei kürzerer Rückführzeit durch die Rückführung von sedimentierten und gut eingedicktem Belebtschlamm erreicht wird. Diese Aufgabe wird durch die Merkmale des Anspruches 1 gelöst, bei welchem nach den V-Phasen und noch vor den R-Phasen sedimentierter, eingedickter Belebtschlamm von den SU-Becken in das B-Becken rückgeführt wird (S-Phase).

Die vorliegende Erfindung zeichnet sich dadurch aus, dass zur Erzielung des Durchflussprinzips das Belebungsbecken (B-Becken) hydraulisch ständig mit mehreren Sedimentationsund Umlaufbecken (SU-Becken) verbunden ist, wobei in den SU-Becken mehrmals am Tag ein Betriebszyklus abläuft, der eine Rührphase (R-Phase), eine Vorabsetzphase (V-Phase) und eine Abzugsphase (A-Phase) aufweist. In der R-Phase wird der Belebtschlamm wieder mit dem Wasser vermischt, in der V-Phase der Belebtschlamm sedimentiert und in der A-Phase Klarwasser abgezogen. Die Zyklen in den SU-Becken werden so phasenverschoben, dass die A-Phasen aneinandergrenzen und somit ein dem Kläranlagen-Zulauf entsprechender Kläranlagenablauf entsteht (Durchflussprinzip). Wesentlich ist dabei, dass noch vor der R-Phase sedimentierter, gut eingedickter Belebtschlamm in das B-Becken rückgeführt wird (S-Phase). Vorteilhafter Weise wird eine hohe Schlammkonzentration im B-Becken und eine kurze Rückführzeit dann erreicht, wenn die Rückförderung erst nach Beendigung der Abzugsphase für geklärtes Wasser (A-Phase) erfolgt.

Die Entnahme des rückzuführenden Belebtschlammes erfolgt zweckmäßiger Weise vom Boden des SU-Beckens, da dort die höchste Schlammkonzentration auftritt.

Durch die Rückförderung des sedimentierten Schlammes wird im B-Becken Wasser verdrängt, das wieder ins SU-Becken über eine oberflächennahe Öffnung zurückgeführt wird. Dieses Wasser enthält ebenfalls Belebtschlamm, allerdings mit einer geringeren Konzentration als der rückgeförderte sedimentierte Schlamm. Um diesen Schlammrückfluss vom Belebungsbecken ins Sedimentationsbecken zu minimieren, ist es gemäß der vorliegenden Erfindung zweckmäßig, vor Beginn der Rückförderung des Belebtschlammes die Belüftung im Belebungsbecken zu unterbrechen oder zu drosseln. Dadurch sinkt der durch die Belüftung aufgewirbelte Belebtschlamm bis unter das Niveau der oberflächennahen Öffnung ab und die Schlammkonzentration des verdrängten Wassers wird reduziert.

Die oberflächennahen Öffnungen werden mit Klappen versehen, die sich automatisch öffnen und in der V- und A-Phase verschlossen sind.

Das Rückführen des sedimentierten Schlammes kann mit elektrischen Geräten (Pumpen, Rührwerken) oder mit Drucklufthebern erfolgen.

Das Rühren in den SU-Becken (R-Phase) kann auch auf verschiedene Weise durchgeführt werden. Es kann Luft eingeblasen, es können elektrisch angetriebene Rührwerke eingesetzt und es können Druckluftheber verwendet werden.

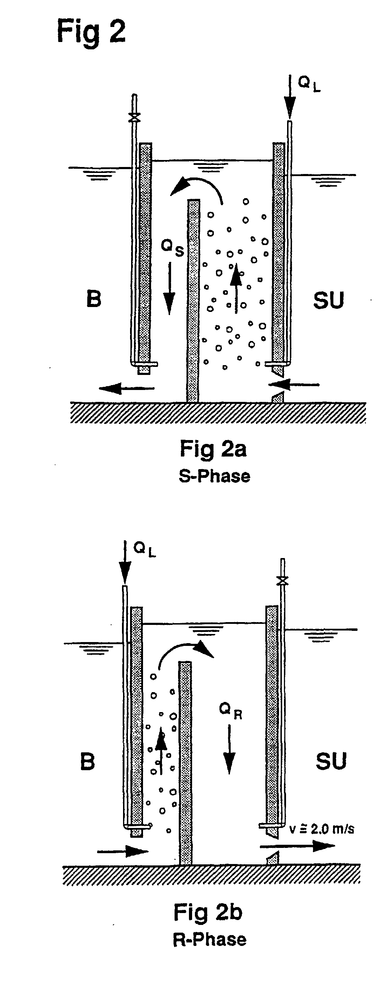

Für das Rückfühlen des Schlammes und für das Rühren des SU-Beckens kann auch ein kombinierter Druckluftheber gemäß Fig. 2 (Doppelheber) eingesetzt werden. Bei Vorhandensein einer feinblasigen Belüftung für das B-Becken kann man diese abstellen und die dann zur Verfügung stehende Druckluft für den Betrieb des Doppelhebers einsetzen. Wichtig ist dabei, dass für das Rühren ein so starker Wasserstrahl entsteht, der abgelagerten Belebtschlamm aufwirbelt, den Inhalt des SU-Beckens homogenisiert und eventuell gebildeten Schwimmschlamm ins B-Becken transportiert, wo er wieder in den Belebtschlamm eingearbeitet werden kann.

Ein B-Becken kann z. B. mit zwei SU-Becken hydraulisch verbunden und die Zykluszeiten mit ca. 140 Minuten angenommen werden: S-Phase ca. 5 min.; R-Phase ca. 5 min.; V-Phase ca. 60 min.; A-Phase ca. 70 min.; A = S + R + V.

Bei drei SU-Becken ergibt sich ein Zyklus von ca. 105 Minuten: S-Phase ca. 5 min.; R-Phase ca. 5 min.; V-Phase ca. 60 min.; A-Phase ca. 35 min.; A = (S + R + V): 2.

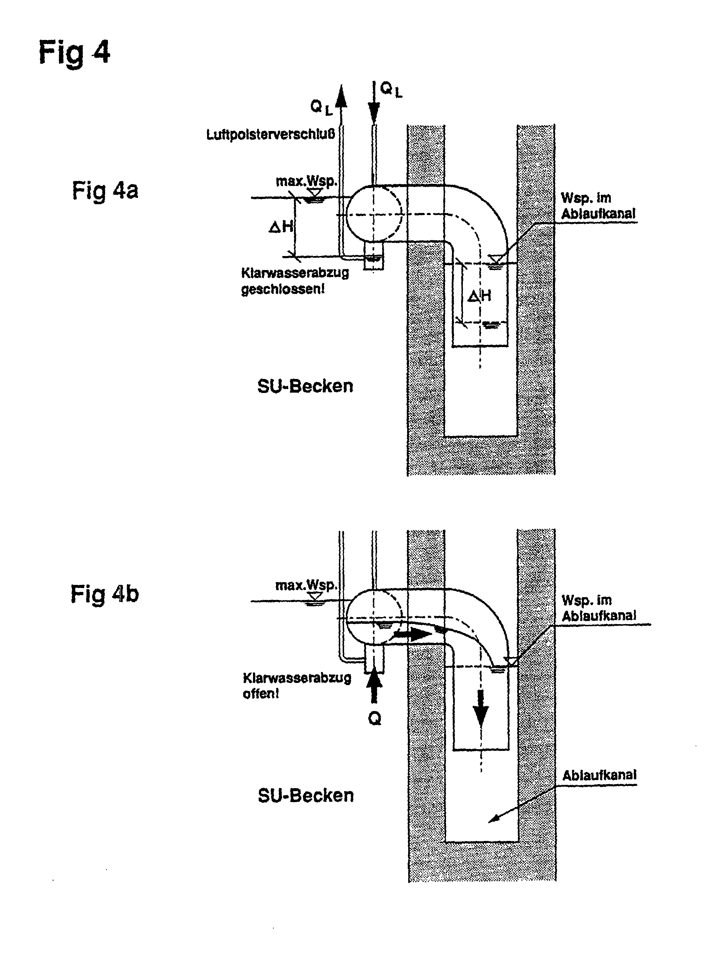

Für den Abzug des Klarwassers hat sich ein fix montierter Druckluftverschluss gut bewährt (Fig. 4). Für den Überschuss- und Schwimmschlammabzug können auch automatisch wirkende Druckluftheber eingesetzt werden.

Weitere Einzelheiten der vorliegenden Erfindung ergeben sich aus der nach-folgenden Beschreibung unter Bezugnahme auf die Zeichnung. Darin zeigt:
- Fig. 1: Eine schematische Darstellung der einzelnen Phasen während eines Zyklus,
- Fig. 2: Eine schematische Darstellung eines Doppelhebers für den Flüssigkeitstransport in beiden Richtungen,
- Fig. 3: Eine schematische Darstellung der einzelnen Phasen während eines Zyklus bei Einsatz eines Doppelhebers, und
- Fig. 4: Eine schematische Darstellung eines Klarwasserabzuges (Druckluftverschluss).

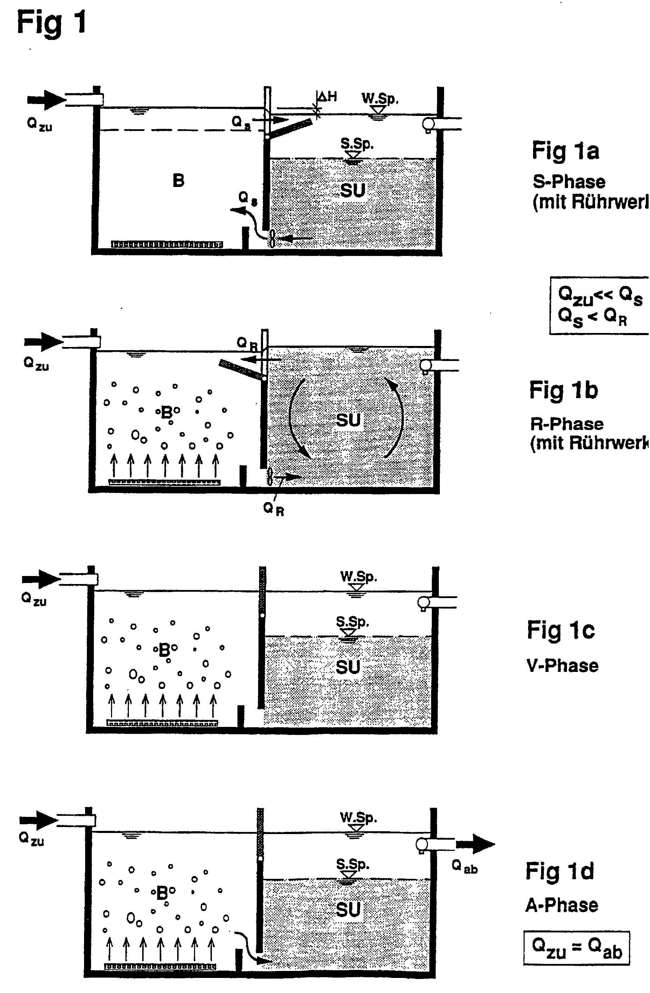

Die Figuren 1a bis d zeigen schematische Darstellungen den Phasen S, R, V und A. Der Vertikalschnitt in Fließrichtung wird durch das B-Becken und durch eines der mindestens zwei SU-Becken geführt. Dem ständigen Zufluss steht nur ein Abfluss in der A-Phase gegenüber. Die S- und R-Phase wird in dieser Darstellung mit Rührwerken betrieben. Die oberflächennahen Öffnungen sind in den V- und A-Phase geschlossen. Mit B wird das Belebungsbecken und mit SU die Sedimentations- und Umlaufbecken bezeichnet. In Fig. 1a ist die S-Phase schematisch dargestellt. Eingedickter Schlamm Qs wird in diesem Fall mit Hilfe eines Rührwerkes vom SU-Becken ins B-Becken durch eine bodennahe, ständig offene Öffnung gefördert und die gleiche Menge Q_{S} fließt über oberflächennahe Öffnungen vom B-Becken ins SU-Becken zurück. Anstatt eines Rührwerkes kann auch z. B. ein Druckluftheber eingesetzt werden. Die Fig. 1b stellt die Rührphase dar. Mit Hilfe eines Rührwerkes wird in diesem Fall ein starker Flüssigkeitsstrom Q_{R} erzeugt, der den Inhalt des SU-Beckens aufwirbelt und homogenisiert. Ein gleich großer Strom gelangt über die oberflächennahen Öffnungen vom SU-Becken ins B-Becken. In Fig. 1c sieht man die V-Phase. Während im SU-Becken der Schlamm sedimentiert und einen geschlossenen Schlammspiegel bildet, wird im B-Becken in diesem Fall mit feinblasiger Druckluft belüftet. Auch die oberflächennahen Öffnungen sind geschlossen. Schließlich zeigt Fig. 1d die A-Phase, in der ein dem Zufluss Q_{zu} entsprechender Abfluss Q_{ab} stattfindet. Die oberflächennahen Öffnungen sind geschlossen. Durch die am Beckenboden ständig offene hydraulische Verbindung strömt eine dem Zufluss Q_{zu} entsprechende Flüssigkeitsmenge, bestehend aus Schlamm und Wasser, dem SU-Becken zu.

In Fig. 2 ist schematisch ein Doppelheber dargestellt. Fig. 2a zeigt den Betrieb in der S-Phase und in Fig. 2b in der R-Phase. In Fig. 2a wird vom SU-Becken durch Einbringen von Druckluft Q_{L} (die Luftbläschen sind dargestellt) eine Flüssigkeitsmenge Qs vom SU-Becken ins B-Becken befördert. In Fig. 2b wird ein entgegengesetzter Flüssigkeitsstrom vom B-Becken in das SU-Becken erzeugt, wobei Q_{R} größer als Qs ist. Wesentlich ist auch, dass der Flüssigkeitsstrom Q_{R} mit einer so großen Fließgeschwindigkeit ins SU-Becken eintritt (v ≈ 2,0 m/s), dass Schlammablagerungen am Boden aufgewirbelt werden und der Inhalt des SU-Beckens homogenisiert wird.

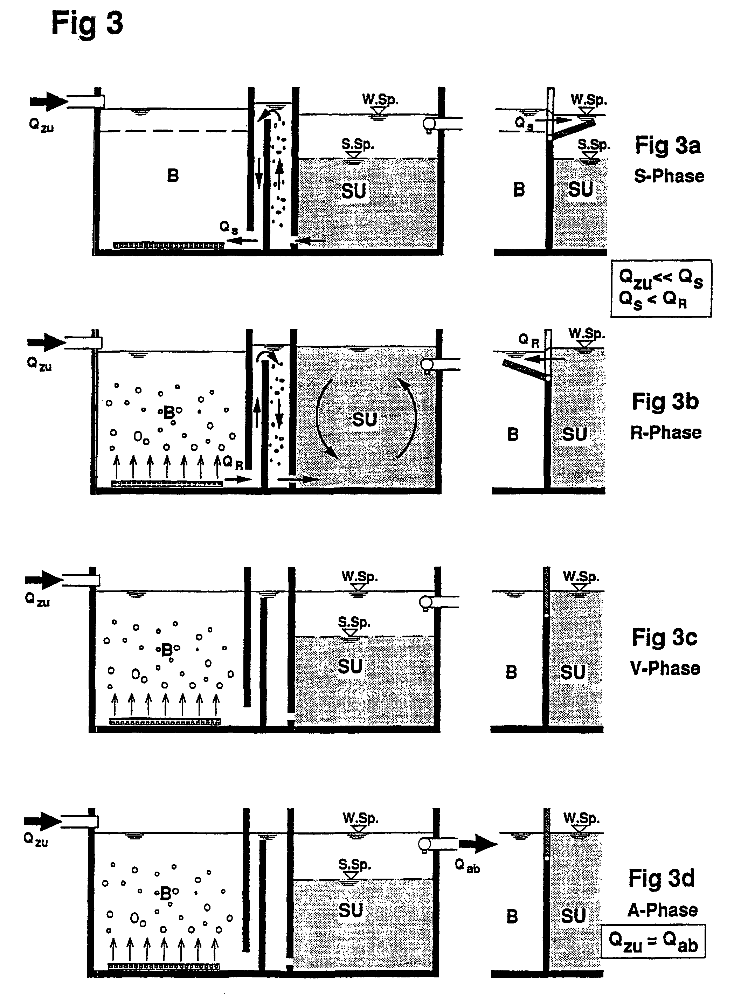

Die Figuren 3a bis d zeigen schematische Darstellungen der Phasen S, R, V und A unter Verwendung des in Fig. 2 beschriebenen Doppelhebers. Seitlich ist der jeweilige Zustand der oberflächennahen Öffnungen mit den Klappen zu sehen. Für die Fig. 3a bis d gilt im wesentlichen auch die Beschreibung der Fig. 1a bis d.

Schließlich zeigt Fig. 4 einen möglichen Klarwasserabzug mit Druckluftverschluss. Im Abstand von ca. 1 m sind vertikal nach unten gerichtete Einzugsstutzen in einem horizontal liegenden Rohr angeordnet. Für die Herstellung des Verschlusses wird Druckluft Q_{L} in das horizontale Rohr eingepresst. Fig. 4a zeigt einen geschlossenen Druckluftverschluss, wobei eine kleine Menge Druckluft Q_{L}, die ständig eingeblasen wird, zur Haltung einer konstanten Wasserspiegeldifferenz ΔH durch ein kleines Röhrchen entweicht. Der maximale Wasserspiegel im SU-Becken ist mit "max. Wsp." und der Wasserspiegel im Ablaufkanal mit "Wsp. im Ablaufkanal" bezeichnet. Im Druckluftverschluss herrscht ein der Differenz ΔH entsprechender Luftdruck. In Fig. 4b ist ein offener Druckluftverschluss dargestellt. Die Abflussmenge beträgt Q. Der Ablaufkanal ist in diesem Fall ein offenes Gerinne, er könnte auch als Druckrohr ausgebildet werden. Innerhalb und außerhalb des Druckluftverschlusses herrscht der gleiche Luftdruck.

## Patentansprüche

1. Verfahren zur biologischen Reinigung von Abwasser mit Hilfe von Belebtschlamm, bei dem das Abwasser zunächst in ein belüftbares Belebungsbecken (B-Becken) und anschließend abwechselnd in eines von mehreren mit dem Becken hydraulisch ständig verbundenen Sedimentations- und Umwälzbecken (SU-Becken) eingeleitet wird, in denen mehrmals am Tag Betriebszyklen ablaufen, die eine Rührphase (R-Phase), eine Vorabsetzphase (V-Phase) und eine Abzugsphase (A-Phase) aufweisen, wobei der Reihe nach in der R-Phase der Belebtschlamm wieder mit dem Wasser vermischt wird, in der V-Phase der Belebtschlamm sedimentiert und in der A-Phase Klarwasser abgezogen wird und wobei die Zyklen in den SU-Becken phasenverschoben sind, die A-Phasen aneinander grenzen, nur in den A-Phasen die SU-Becken durchströmt werden, ein annähernd konstanter Wasserspiegel vorhanden ist und somit ein dem Kläranlagenzulauf entsprechender Kläranlagenablauf entsteht (Durchflussprinzip),
**dadurch gekennzeichnet, dass**
nach den V-Phasen und noch vor den R-Phasen sedimentierter, eingedickter Belebtschlamm von den SU-Becken in das B-Becken rückgeführt wird (S-Phase).

2. Verfahren nach Anspruch 1, **dadurch gekennzeichnet, dass** die Rückförderung von sedimentiertem Belebtschlamm während oder vorzugsweise nach der A-Phase erfolgt.

3. Verfahren nach Anspruch 2, **dadurch gekennzeichnet, dass** das in der S-Phase im B-Becken verdrängte Volumen mit geringerer Trockensubstanz als der eingeleitete sedimentierte Belebtschlamm über oberflächennahe Öffnungen in die SU-Becken rückgeführt wird und dass die oberflächennahen Öffnungen nur einen Durchfluss in der S-und R-Phase erlauben und in der V- und A-Phase verschlossen sind.

4. Verfahren nach einem der Ansprüche 1 bis 3, **dadurch gekennzeichnet, dass** das Rühren in den SU-Becken (R-Phase) durch Einblasen von Luft, durch elektrisch angetriebene Rührwerke oder durch Druckluftheber erfolgt.

5. Verfahren nach den Ansprüchen 1 bis 4, **dadurch gekennzeichnet, dass** für das Rückführen des sedimentierten Belebtschlammes und für das Rühren im SU-Becken (S- und R-Phase) ein kombinierter Druckluftheber (Doppelheber) eingesetzt wird, der einen Flüssigkeitstransport in beiden Richtungen erlaubt und die ständige bodennahe hydraulische Verbundenheit in den V- und A-Phasen zwischen dem B-Becken und den SU-Becken herstellt, wobei der Rühreffekt in den SU-Becken durch Erzeugen eines kräftigen Wasserstrahles entsteht, der am Boden abgelagerten Belebtschlamm aufwirbelt, der eine Wasserwalze mit homogenisierender Wirkung erzeugt und der eventuell entstehenden Schwimmschlamm über die oberflächennahen Öffnungen in das B-Becken transportiert.

6. Verfahren nach den Ansprüchen 1 bis 5, **dadurch gekennzeichnet, dass** die Belüftung des B-Beckens in den R-Phasen, in den S-Phasen bzw. in beiden Phasen unterbrochen wird.

7. Verfahren nach den Ansprüchen 1 bis 6, **dadurch gekennzeichnet, dass** ein B-Becken mit zwei SU-Becken hydraulisch verbunden wird und die Zykluszeiten mit ca. 140 Minuten (S-Phase ca. 5 min.; R-Phase ca. 5 min.; V-Phase ca. 60 min.; A-Phase ca. 70 min.; A = ( S + R + V ); gewählt werden bzw. mit drei SU-Becken hydraulisch verbunden wird und die Zykluszeiten mit ca. 105 Minuten (S-Phase ca. 5 min.; R-Phase ca. 5 min.; V-Phase ca. 60 min.; A-Phase ca. 35 min.; A = ( S + R + V ) : 2) gewählt werden.

8. Verfahren nach den Ansprüchen 1 bis 7, **dadurch gekennzeichnet, dass** der Abzug als Druckluftverschluss mit einem horizontal liegenden Rohr und zumindest einem nach unten gerichtetem Einzugsstutzen ausgebildet ist, wobei in das horizontal liegende Rohr Druckluft einblasbar ist.

9. Verfahren nach den Ansprüchen 1 bis 8, **dadurch gekennzeichnet, dass** am Ende der V-Phase in einer vorgegebenen Tiefe von ca. 1,0 bis 1,5 m unter dem Wasserspiegel die Schlammkonzentration gemessen und am Ende der A-Phase eingedickter Überschussschlamm kurzzeitig (wenige Minuten) abgezogen wird, wenn die Messung der Schlammkonzentration einen über der Messstelle liegenden Schlammspiegel ergeben hat.

10. Verfahren nach den Ansprüchen 1 bis 9, **dadurch gekennzeichnet, dass** das B-Becken mit den SU-Becken durch eine oder mehrere Öffnungen im mittleren Bereich (ca. auf halber Wassertiefe) der Becken hydraulisch ständig verbunden ist, dass in der S-Phase eingedickter Schlamm vom Boden der SU-Becken in den oberen (oberflächennahen) Bereich des B-Beckens geleitet und der dadurch verdrängte Inhalt des B-Beckens über die Öffnungen im mittleren Bereich der Becken rückgeführt wird, dass in der R-Phase der Inhalt des SU-Beckens aufgewirbelt und homogenisiert wird, ohne eine Umlaufströmung über das B-Becken zu erzeugen und dass in der A-Phase der Durchfluss vom B-Becken in die SU-Becken ebenfalls durch die Öffnungen im mittleren Bereich erfolgt.

## Claims

1. Method for biological purification of wastewater by means of activated sludge, wherein the wastewater is introduced first into an aerated activated sludge tank (B tank) and then, by turns, into one of several sedimentation and recirculation tanks (SU tanks), which are permanently hydraulically linked with said B tank and in which, several times a day an operating cycle proceeds comprising a stirring phase (R phase), a pre-settling phase (V phase) and a discharge phase (A phase), wherein in turns in the R phase the activated sludge is remixed with the water, in the V phase the activated sludge settles down and in the A phase dear water is drawn off, and wherein the cycles in the SU tanks are phase displaced to each other, the A phases are adjacent, only in the A phases the SU tanks are flown through, an approximately constant water level is present, thus causing an outflow from the purification plant corresponding to its inflow (throughflow principle),
**characterized in that**
after the V phases and before the R phases settled and thickened activated sludge is reintroduced from the SU tank into the B tank (S phase).

2. Method according to claim 1, **characterized in that** the reintroduction of settled activated sludge occurs during or preferable after the A phase.

3. Method according to claim 2, **characterized in that** the volume displaced in the B tank during the S phase with less dry substance than the introduced settled activated sludge is returned via openings near to the surface into the SU tanks, and the surface-near openings allow a throughflow only in the S and R phases and are dosed in the V and A phases.

4. Method according to any one of claims 1 to 3, **characterized in that** the stirring in the SU tanks (R phase) is done by injecting air, by means of electrically driven stirring apparatuses or by means of air-jet lifts.

5. Method according to any one of claims 1 to 4, **characterized in that** for reintroducing settled activated sludge and for stirring in the SU tanks (S and R phases) a combined air-jet lift (duplex siphon) is used, which allows a transport of fluid in both directions and provides a permanent hydraulic connection between the B tank and SU tanks in the V and A phases, wherein the stirring effect in the SU tanks is produced by generating a strong jet of water which whirls up activated sludge sedimented on the bottom, generates a water roll with homogenizing effect and transports possibly developing floating sludge via the surface-near openings into the B tank.

6. Method according to any one of claims 1 to 5, **characterized in that** the aeration of the B tank is intermittent in the R phases, in the S phases or in both.

7. Method according to any one of claims 1 to 6, **characterized in that** a B tank is hydraulically connected with two SU tanks and the cycle times are chosen based on approx. 140 min (S phase approx. 5 min; R phase approx. 5 min; V phase approx. 60 min.; A phase approx. 70 min; A = ( S + R + V )), or with three SU tanks and the cycle times are chosen based on approx. 105 min (S phase approx. 5 min; R phase approx. 5 min; V phase approx. 60 min; A phase approx. 35 min; A = ( S + R + V ) : 2 ).

8. Method according to any one of claims 1 to 7, **characterized in that** the outlet is realized as a pneumatic closure having a horizontal tube and at least one drainage socket oriented downward, wherein into the horizontal tube pressured air can be injected.

9. Method according to any one of claims 1 to 8, **characterized in that** at the end of the V phase the sludge concentration is measured at a predefined depth of approx. 1.0 to 1.5 m below the water level, and at the end of the A phase thickened surplus sludge is drawn off for a short time (a few minutes) if the measurement of the sludge concentration revealed a sludge level lying above the measuring position.

10. Method according to any one of claims 1 to 9, **characterized in that** the B tank is permanently connected hydraulically with the SU tanks via one or more openings in the middle region (at about half the water depth), in the S phase thickened sludge is led from the bottom of the SU tank into the upper region (near to the surface) of the B tank and the content of the B tank thereby displaced is returned via the openings in the middle region of the tanks, in the R phase the content of the SU tank is whirled up and homogenized without generation of a circulating current over the B tank, and in the A phase the flow from the B tank into the SU tanks occurs via the openings in the middle region as well.

## Revendications

1. Procédé d'épuration biologique d'eaux usées à l'aide de boue activée, dans lequel les eaux usées sont dans un premier temps introduites dans un bassin d'activation pouvant être aéré (bassin B), et ensuite en alternance dans l'un des multiples bassins de sédimentation et de circulation (bassin SU) reliés en permanence par voie hydraulique à ce bassin, dans lesquels se déroulent plusieurs fois par jour des cycles de fonctionnement, comprenant une phase d'agitation (phase R), une phase de pré-sédimentation (phase V) et une phase de soutirage (phase A), étant précisé que, dans l'ordre de succession, la boue activée est à nouveau mélangée avec l'eau dans la phase R, la boue activée sédimente dans la phase V, et de l'eau claire est soutirée dans la phase A, et que les cycles dans les bassins SU sont décalés en phases, les phases A se succédant les unes après les autres, une circulation n'ayant lieu dans les bassins SU que dans les phases A, un niveau d'eau étant maintenu approximativement constant, et un débit d'évacuation de la station d'épuration correspondant au débit d'arrivée à la station d'épuration (principe de passage) étant de ce fait engendré,
**caractérisé en ce que**,
après les phases V et encore avant les phases R, de la boue activée sédimentée épaissie est recyclée des bassins SU dans le bassin B (phase S).

2. Procédé selon la revendication 1, **caractérisé en ce que** le recyclage de boue activée sédimentée est effectué pendant ou de préférence après la phase A.

3. Procédé selon la revendication 2, **caractérisé en ce que** le volume refoulé dans le bassin B pendant la phase S, dont la teneur en substance sèche est inférieure à celle de la boue activée sédimentée introduite, est recyclé dans les bassins SU par l'intermédiaire d'ouvertures proches de la surface, et **en ce que** les ouvertures proches de la surface ne permettent un passage que dans les phases S et R, et sont fermées dans les phases V et A.

4. Procédé selon l'une quelconque des revendications 1 à 3, **caractérisé en ce que** l'agitation dans les bassins SU (phase R) est effectuée par insufflation d'air, par des agitateurs entraînés électriquement ou par des systèmes de relevage pneumatiques.

5. Procédé selon l'une quelconque des revendications 1 à 4, **caractérisé en ce que**, pour le recyclage de la boue activée sédimentée et pour l'agitation dans le bassin SU (phases S et R), il est utilisé un système de relevage pneumatique combiné (système de relevage double), qui permet un transport de liquide dans les deux sens, et qui, dans les phases V et A, établit la liaison hydraulique permanente à proximité du fond entre le bassin B et les bassins SU, l'effet d'agitation dans les bassins SU étant obtenu par la génération d'un jet d'eau intense, qui décolle de la boue activée qui s'est déposée sur le fond, engendre un rouleau d'eau à effet homogénéisant, et transporte dans le bassin B de la boue surnageante éventuellement engendrée, par l'intermédiaire des ouvertures proches de la surface.

6. Procédé selon l'une quelconque des revendications 1 à 5, **caractérisé en ce que** l'aération du bassin B est interrompue dans les phases R, dans les phases S, ou dans les deux phases.

7. Procédé selon l'une quelconque des revendications 1 à 6, **caractérisé en ce qu'**un bassin B est relié par voie hydraulique à deux bassins SU, et **en ce que** les durées de cycles sont choisies à raison d'environ 140 minutes (phase S environ 5 min ; phase R environ 5 min ; phase V environ 60 min ; phase A environ 70. min ; A = (S + R + V) ; ou est relié par voie hydraulique à trois bassins SU, et **en ce que** les durées de cycles sont choisies à raison d'environ 105 minutes (phase S environ 5 min ; phase R environ 5 min ; phase V environ 60 min ; phase A environ 35 min ; A = (S + R + V) : 2).

8. Procédé selon l'une quelconque des revendications 1 à 7, **caractérisé en ce que** le soutirage est réalisé à l'aide d'un obturateur à air comprimé avec un tube situé à l'horizontale, et au moins une tubulure d'introduction orientée vers le bas, de l'air comprimé pouvant être insufflé dans le tube situé à l'horizontale.

9. Procédé selon l'une quelconque des revendications 1 à 8, **caractérisé en ce que** la concentration en boue est mesurée à la fin de la phase V à une profondeur prédéterminée de l'ordre de 1,0 à 1,5 m au-dessous du niveau d'eau, et **en ce que**, à la fin de la phase A, de la boue épaissie excédentaire est soutirée temporairement (quelques minutes) si la mesure de la concentration en boue a conduit à un niveau de boue se situant au-dessus du point de mesure.

10. Procédé selon l'une quelconque des revendications 1 à 9, **caractérisé en ce que** le bassin B est relié en permanence par voie hydraulique aux bassins SU par l'intermédiaire d'une ou de plusieurs ouvertures situées dans la zone centrale des bassins (environ à mi-hauteur de la profondeur de l'eau), **en ce que** dans la phase S, de la boue épaissie est introduite du fond des bassins SU dans la zone supérieure (proche de la surface) du bassin B, et que le contenu du bassin B refoulé de ce fait est recyclé par l'intermédiaire des ouvertures pratiquées dans la zone centrale des bassins, **en ce que** dans la phase R, le contenu du bassin SU est mis en tourbillons et homogénéisé sans engendrer un courant de circulation par l'intermédiaire du bassin B, et **en ce que** dans la phase A, le débit de passage du bassin B dans les bassins SU est également effectué par l'intermédiaire des ouvertures pratiquées dans la zone centrale.
